(19) Europäisches Patentamt
European Patent Office
Office européen des brevets

(11) **EP 1 923 832 B1**

(12) **EUROPEAN PATENT SPECIFICATION**

(45) Date of publication and mention
of the grant of the patent:
**28.07.2010 Bulletin 2010/30**

(51) Int Cl.:
***G06T 1/00*** *(2006.01)*

(21) Application number: **07120587.6**

(22) Date of filing: **13.11.2007**

(54) **Digital data set watermarking method and device implementing said method**

Verfahren zur Kennzeichnung digitaler Datensätze und Vorrichtung zur Anwendung dieses Verfahrens

Procédé de filigranage d'ensemble de données numériques et dispositif mettant en oeuvre ce procédé

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **16.11.2006 FR 0654943**

(43) Date of publication of application:
**21.05.2008 Bulletin 2008/21**

(73) Proprietor: **Thomson Licensing**
**92443 Issy-les-Moulineaux Cedex (FR)**

(72) Inventors:
• **Baudry, Séverine**
**92648, BOULOGNE CEDEX (FR)**
• **Naturel, Corinne**
**92648, BOULOGNE CEDEX (FR)**
• **Nguyen, Philippe**
**92648, BOULOGNE CEDEX (FR)**

(74) Representative: **Le Dantec, Claude**
**Technicolor**
**1-5 rue Jeanne d'Arc**
**92130 Issy-les-Moulineaux (FR)**

(56) References cited:
**WO-A-02/23468        US-A1- 2002 124 174**
**US-A1- 2003 112 996**

• **CAMPISI P ET AL: "Object-based quality of service assessment using semi-fragile tracing watermarking in mpeg-4 video cellular services" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, vol. VOL. 2 OF 3, 22 September 2002 (2002-09-22), pages 881-884, XP010608113 ISBN: 0-7803-7622-6**

**Description**

1. Field of the invention

The invention relates to a digital data set watermarking method. The invention also relates to a watermarking device implementing said method. In addition, the invention relates to a method for evaluating the quality of the digital data set watermarked using the watermarking method defined above after its processing and/or transmission.

2. Prior art

In many technical fields, it is necessary to evaluate the quality of an image, of a video or image sequence, or more exactly the quality degradation resulting from processing operations applied to the video. For instance, during a digital transmission, videos will be compressed (for instance, to the MPEG2 format), inserted in transport streams and broadcasted via satellite or cable, etc. The compression will cause a degradation of the perceptual quality of the video (block effects, noise, etc.) that is all the more important as the rate is low. In addition, when the bit stream is transmitted by satellite it can be noisy and the corresponding MPEG flow may no longer comply. This will result in decoding errors on the receiver side which may have more or less inconvenient consequences: image freeze, black images, erroneous image blocks etc. Therefore, it is often necessary to check the video quality along the transmission chain. This is a costly operation when it is carried out by a human operator all the more as the number of channels to be evaluated is high. This is why it is often preferable to use an automatic system used to evaluate an objective quality. Among the numerous existing quality metrics, one of the simplest is the PSNR (acronym for "Peak Signal Noise Ratio"), defined from the mean square error, noted MSE, between the original video and the altered video. However, it is well-known that this measurement is lightly correlated with the visual quality perceived by man. So, two videos with the same PSNR may correspond to very different subjective qualities. This is why many more or less complex models of the human visual system have been developed (e.g. Watson model, JND, Scott Daly model, etc.), from which quality metrics more advanced than the PSNR have been derived. These metrics are generally closer to the subjective quality perceived by a human being. Therefore, they make it possible to obtain a relatively reliable estimate of the subjective quality of a video. However, most of these metrics operate either with a complete reference, i.e. from the entire original video and altered video, or with a reduced reference, i.e. only from the altered video and a "condensate" of the original video. For instance, during a "monitoring broadcast" application, the quality is measured at the receiver with complete reference metrics. Therefore, it is necessary to convey and process a very large quantity of data, i.e. the reference video, generally not compressed, which implies the availability of very high bitrate links. The problem is less important with reduced reference metrics but all the same requires relatively high bitrates for video "condensate" transmission.
Another well-known technique is to transmit a known video or a pattern over the transmission channel, for instance at regular time intervals for continuous quality monitoring. The receiver, knowing the original pattern, may reconstruct it before estimating the objective quality by comparing the reconstructed pattern with the transmitted pattern. This solution makes it possible to avoid implementing an auxiliary high bitrate channel. The pattern may be chosen so that some artefacts (e.g. spatial / colorimetric / frequency sensitivity) are measured accurately. However, such a technique cannot be used in practice, since it involves deleting the useful video signal and it is very intrusive, showy, i.e. that it significantly interferes with the useful video signal.

3. Summary of the invention

The purpose of the invention is to compensate for at least one disadvantage of the prior art.
The invention relates to a digital data set watermarking method including the steps as disclosed in claim 1.
According to a preferred embodiment, step b) consists in a Viterbi decoding which advantageously makes it possible to carry out an exhaustive decoding for a relatively low complexity.
According to one particular embodiment, the digital data set is an image.
Preferentially, the image is divided in non-overlapping pixel blocks, n is equal to 1 and each 1-uplet of the first set is equal to the difference between the average luminance of a first image block and the average luminance of a second image block, the second block being adjacent to the first one and located below the first block.
According to a particular characteristic, N=2.
In addition, the invention relates to a quality evaluation method according to claim 6 after transmitting and/or processing of a digital data set watermarked using the watermarking method described above.
Preferentially, the determination step of the second set is preceded by a quantization step with N quantizers of each of the n-uplets of the first set in N quantized n-uplets, where N is an integer and $N \geq 2$ and in which the predefined batch is a subset of the quantized n-uplets or the set of the quantized n-uplets.
The invention also relates to a device for watermarking a set of digital data, according to claim 7.

Preferentially, the third means comprises a Viterbi decoder.

4. <u>List of figures</u>

The invention will be better understood and illustrated by means of advantageous embodiments and implementations, by no means limiting, with reference to the figures attached in the appendix, wherein:

- figure 1 illustrates a watermarking method according to the invention,
- figure 2 represents a video sequence image divided into pixel blocks,
- figure 3 illustrates part of the watermarking method according to the invention,
- figure 4 illustrates a method used to evaluate the quality of a digital data set watermarked using the watermarking method of figure 1, and
- figure 5 illustrates a watermarking system according to the invention.

5. <u>Detailed description of the invention</u>

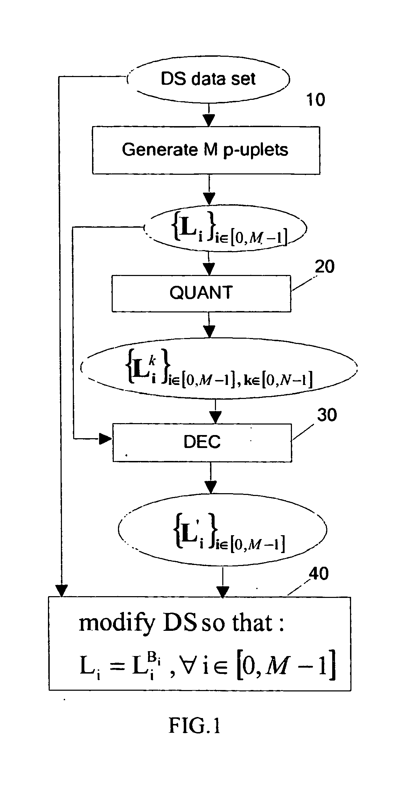

In reference to figure 1, the invention relates to a method used to watermark a digital data set such as video data, audio data or more generally multimedia data. This watermarking method is advantageously used by a evaluation method of the quality of said digital data set after its transmission and/or processing, e.g. compression. On this figure, the represented modules are functional units, which may or may not correspond to physically distinguishable units. For example, these modules or some of them can be grouped together in a single component, or constitute functions of the same software. On the contrary, some modules may be composed of separate physical entities. The invention described within the framework of video digital data may apply to other data such as audio data or multimedia data.

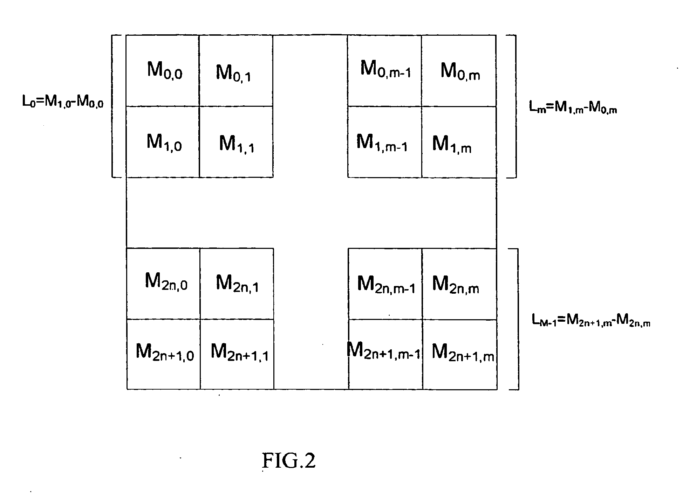

Step 10 consists in generating from the DS initial digital data set a first set $\{L_i\}_{i \in [0, M-1]}$ of M p-uplets representative of the DS data set, where M and n are positive integers equal to or greater than 1. An embodiment is illustrated by figure 2 in the special case of digital data of the video type. On this figure, an image is divided into blocks $B_T$ of size H by W pixels, said BT blocks not overlapping. In this example, p=1, i.e. each 1-uplet $L_i$ comprises a single digital value also noted $L_i$. Each value $L_i$ is equal to the difference between the average luminance $M_{2i,j}$ of a first block $B_T$ and the average luminance $M_{2i+1,j}$ of a second block $B_T$ located just below said first block, i.e. $L_0 = M_{1,0} - M_{0,0}$, ..., $L_{M-1} = M_{2n+1,m} - M_{2n,m}$, where $M_{i,j}$ is the average luminance of the $B_T$ block of coordinates (i, j). For an image of size 720 by 576 pixels, using $B_T$ blocks of size 32 by 32 pixels is advantageous. The second block is adjacent to the first block and is located below this first block. According to a variant, each value $L_i$ is calculated from the average luminances calculated for P blocks collocated in P video consecutive images, i.e. $L_0 = M_{1,0} - M_{0,0}$, ..., $L_{M-1} = M_{2n+1,m} - M_{2n,m}$, where $M_{i,j}$ is the average luminance of N blocks $B_T$ of coordinates (i, j) belonging to P consecutive images. More generally, the first set of M p-uplets can be generated from digital data transformed beforehand, for instance from wavelet coefficients or DCT (acronym for "Discrete Cosine Transform") coefficients. According to another variant, a p-uplet $L_i$ comprises at least two digital values. For instance, a p-uplet $L_i$ generated from a $B_T$ block of the image comprises the luminance values associated with each pixel of the $B_T$ block. In this case, p=H*W.

Step 20 consists in quantifying each of the M p-uplets $L_i$ with N quantizers in N quantized p-uplets, i.e. N quantized p-uplets $L_i^k, k \in [0, N-1]$

are generated from each p-uplet $L_i$. In the special case where N=2 and where each p-uplet comprises a single digital value $L_i$, the two quantization functions are defined as follows:

$$L_i^0 = Q_p q(L_i + t_1) + Q_p / 2 - t_1$$

$$L_i^1 = Q_p q(L_i + t_2) + Q_p / 2 - t_2$$

where:

$$- \quad q(x) = E(\frac{x}{Q_P}) \text{ if } \ldots, \quad q(x) = E(\frac{x+1}{Q_P}) - 1$$

if $x < 0$, i.e. $q$ is the integer part function of x/Q ; and

- $Q_p$ is the quantization step, for example $Q_p = 1$.

Preferably, $t_2 = t_1 + Q_p/2$ such that the distance between the two quantizers is maximum. In particular, the two following quantization functions may be used:

$$L_i^0 = Q_p q(L_i - \frac{Q_P}{4}) + 3\frac{Q_P}{4}$$

$$L_i^1 = Q_p q(L_i + \frac{Q_P}{4}) + \frac{Q_P}{4}$$

According to a particular embodiment, a uniform quantization is used. Preferably, the two quantization functions are offset by Qp/2. Indeed, a compression of the MPEG type will quantify the signals under the kQ' form. If the quantization used in step 20 quantizes the signal under the kQp form with Qp close to Q', then the compression has little impact on the watermarking. Hence, detecting degradations due to compression is more difficult. Therefore, it is preferable to set quantized values at the maximum distance of the values to which they tend due to the effect of a strong compression, i.e. with a high quantization step.

According to one variant, a dead zone quantization is used. In this case, each value $L_i$ is for instance quantized as follows:

$$L_i^0 = Q_1(L_i - \frac{Q_P}{2}) + 3 * \frac{Q_P}{4}$$

$$L_i^1 = Q_1(L_i + \frac{Q_P}{2}) + \frac{Q_P}{4}$$

where $Q_1(x) = Q_p.q(x)$.

In the case where each p-uplet $L_i$ comprises more than one digital value, a vector quantization is applied at step 20 instead of a scalar quantization. For that purpose, a scalar quantizer product (i.e. one per digital value of each p-uplet), a lattice quantizer or a random quantizer may be used.

Step 30 consists in determining in a predefined batch of sets of M p-uplets, also called dictionary, the set $\{L'_i\}_{i \in [0,M-1]}$ closest in the sense of predefined metrics to the first set $\{L_i\}_{i \in [0,M-1]}$ of M p-uplets. A first embodiment consists in carrying out a Viterbi decoding. For that purpose, a dictionary formed by all the words of the parameter convolutional code (3,2) is defined. Such a decoding is well known by those skilled in the art of digital communications. It is described in particular in the work called "Digital Communications" from J. Proakis published by Mc Graw Hill. It consists in browsing a lattice, the nodes (also called states) of which correspond to the internal states of the encoder and the transitions (also called branches) of which connecting 2 states of the lattice correspond to the permitted transitions between 2 states. The input symbol and the sequence of corresponding output symbols are associated with each transition. In the simplest lattices, each state comprises 2 transitions corresponding to the possible input bits 0 or 1. For a word to be decoded, the transition scores correspond to the "distance" between the symbols of the word to be decoded and the output symbols for the given branch. The parameters of the Viterbi lattice are noted (r,q), where r represents the channel memory. The more r is high the more the coding/decoding is robust but the longer are the processing operations. Preferably r=3 and q=2. In the particular case where N=2 and where each p-uplet comprises a single digital value $L_i$, the relative distances from $L_i$ to $L_i^0$ and to $L_i^1$ are used to calculate metrics noted x, for instance in the following way:

$$x_i = \frac{2*(L_i - L_i^0)}{L_i^1 - L_i^0} - 1$$

$x_i$ is positive if $L_i$ is closer to $L_i^1$ and negative if $L_i$ is closer to $L_i^0$. These metrics are associated with the lattice branches on which the Viterbi algorithm is performed. Other metrics which take account of a psycho-visual model for instance may be used. These metrics may also change along the decoding lattice to weigh differently the importance of the different decoded bits (which may for instance correspond to different frequency coefficients). These metrics associated with the branches are also called transition score.

The Viterbi algorithm is used to determine the most probabilistic lattice configuration considering the predefined metrics, i.e. the binary word $\{B_i\}_{i\in[0,M-1]}$ belonging to the predefined dictionary which is the closest to the first set of M p-uplets in the sense of said metrics. A second set $\{L'_i\}_{i\in[0,M-1]}$ of M p-uplets is directly deduced from this binary word in the following way:

$$\forall i \in [0, M - 1], L'_i = L_i^{B_i} .$$

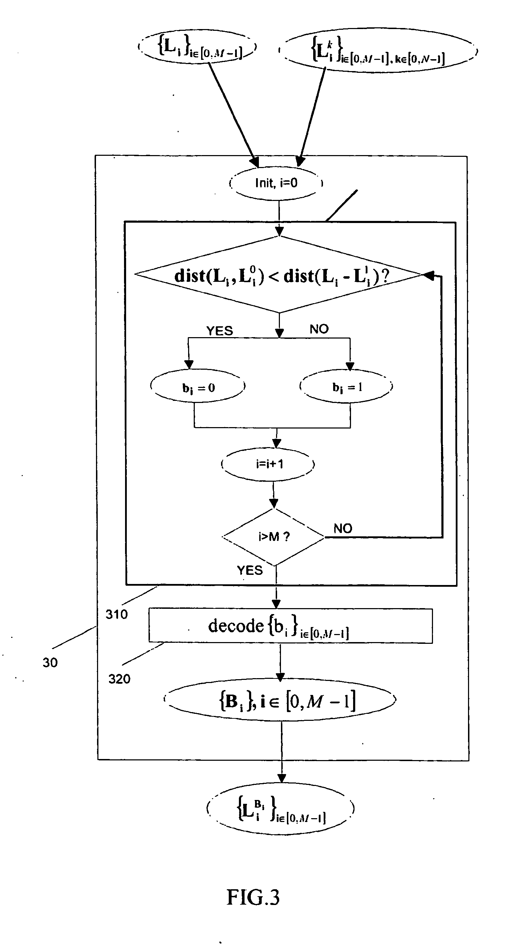

Therefore, this second set is the closest to the first set of M p-uplets generated at step 10 in the sense of the metrics defined above. According to a variant illustrated by figure 3 in the case where N=2, each $L_i$ is 310 demodulated in a bit $b_i$ which is worth '0' if $L_i$ is closer to $L_i^0$ and which is worth '1' if $L_i$ is closer to $L_i^1$. The binary word $\{b_i\}_{i\in[0,M-1]}$ obtained in this way is then 320 decoded in a word $\{B_i\}_{i\in[0,M-1]}$ by the Viterbi decoding algorithm with the following metrics for instance: +1; -1 (for bits 1 and 0). From this word $\{B_i\}_{i\in[0,M-1]}$, the second set $\{L'_i\}_{i\in[0,M-1]}$ of M p-uplets is deduced.

Any type of code may be used for step 30, i.e. convolutional, algebraic, random. Likewise, any type of decoding may be used provided that the decoding is exhaustive. The advantage of using a convolutional code decoded by Viterbi is the ability to carry out an exhaustive decoding for a relatively low complexity.

$$\text{If } x \in [-1,1] \text{ then } T_B(x) = B * x$$

$$\text{If } |x| > 1 \text{ then if B>0 }, \ T_B(x) = (s+1) - s * x \text{ , otherwise } T_B(x) = (-s+1) - s * x .$$

Step 40 of the watermarking method then consists in modifying at least one data item of the DS initial digital data set in such a way that a first data set generated according to step 10 from the data set modified in this way, is equal to the second set of M p-uplets. More precisely, this step 40 consists in modifying according to the second set of M p-uplets determined at step 30 at least one data item of the digital data set in such a way that $\forall i \in [0, M-1] L_i = L'_i$. In the particular case where $L_i$ is equal to the difference between the average luminance $M_{2k,j}$ of a first block $B_T$ and the average luminance $M_{2k+1,j}$ of a second block $B_T$ located just below said first block, $M_{2k,j}$ can be modified for instance if $L_i - L'_i$ is positive and $M_{2k+1,j}$ if $L_i - L'_i$ is negative. If $L_i - L'_i$ is positive, $$\dfrac{L_i - L'_i}{HW}$$

for example will be added to the luminance value of each pixel of the block $M_{2k,j}$. Since this quantity is generally not an integer, a different quantity can be added to the luminance value of each pixel so that the relation $L_i = L'_i$ is strictly verified.

This watermarking method makes it possible to impose the slightest possible modification of the DS initial digital data set in agreement with the lattice. Advantageously, it is used to maximize the watermarking invisibility while imposing a robust modification to the modifications undergone during the processing and/or transmission. This robustness depends on the lattice parameters.

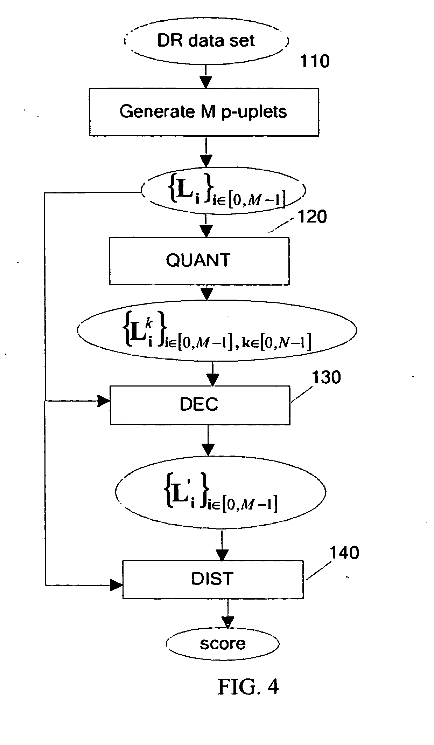

The invention also relates to a quality evaluation method after transmitting and/or processing of a digital data set watermarked using the watermarking method defined above. For this purpose, in reference to figure 4, the method comprises a step 110 which consists in generating, from the DR digital data set watermarked according to the method described above and transmitted and/or processed, a first set of M p-uplets $\{L_i\}_{i\in[0,M-1]}$ representative of the DR data set, where M is a positive integer and M ≥ 1. Each p-uplet generated in this way comprises at least one digital value. The step 110 is the same step as step 10 of the watermarking method applied to the DS initial digital data set before transmission and/or processing.

Step 120 consists in quantifying each of the M p-uplets $L_i$ with N quantizers in N quantized p-uplets, i.e. N quantized p-uplets $L_i^k, k \in [0, N - 1]$ are generated from each p-uplet $L_i$. Step 120 is the same step as step 20 of the watermarking method applied before transmission and/or processing.

Step 130 consists in determining in a predefined batch of M p-uplets sets the set $\{\mathbf{L'}_i\}_{i\in[0,M-1]}$ closest in the sense of predefined metrics to the first set of M p-uplets. Step 120 is, preferably, the same step as step 30 of the watermarking method applied before transmission and/or processing.

Step 140 consists in calculating a score representative of the quality of the processed and/or transmitted DR data set. In the case where each $L_i$ value is equal to the difference between average luminance $M_{2i,j}$ of a first block $B_T$ and average luminance $M_{2i+1,j}$ of a second block $B_T$ located just below said first block, the Viterbi algorithm is used to evaluate the deformation of the differences of the average values of consecutive vertical blocks. A score is calculated by averaging these estimates over the entire image. According to a variant, the score is calculated as being the minimum value of these estimates. The calculated score is almost constant for images of the same shot in the case where there is no event, i.e. no quality degradation. Therefore, a reduction of the score corresponds either to a shot change or to an event. This score will be the score chosen for event detection. To complete this detector, a shot change detector can be associated with it so that a discrimination can be made between shot change cases and event cases. An event corresponds to the case where there is a reduction of the score whereas there is no shot change.

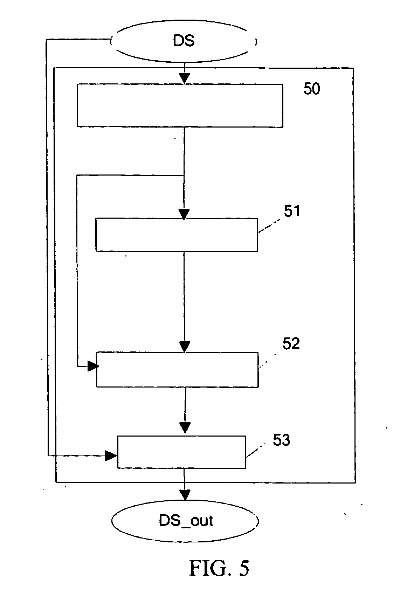

A suitable watermarking system 5 to implement the watermarking method described above is illustrated by figure 5. It includes in particular a suitable module 50 to generate from the DS initial digital data set a first set $\{L_i\}_{i\in[0,M-1]}$ of M p-uplets representative of the DS data set, where M and n are positive integers equal to or greater than 1. It also includes a suitable module 51 to quantize each of the M p-uplets $L_i$ with N quantizers in N quantized p-uplets, noted

$$\mathbf{L}_i^k, k \in [0, N-1].$$

In addition, the system 5 includes a suitable module 52 to determine in a predefined batch of M p-uplets sets, also called dictionary, the set $\{\mathbf{L'}_i\}_{i\in[0,M-1]}$ closest in the sense of predefined metrics to the first set $\{L_i\}_{i\in[0,M-1]}$ of M p-uplets. It also includes a suitable module 53 to modify at least one data item of the DS initial digital data set into DS_out modified data in such a way that a first data set generated by the module 50 from the set of data modified in this way is equal to the second set of M p-uplets. According to a particular embodiment the module 52 includes a Viterbi decoder.

Naturally, the invention is not limited to the embodiment examples mentioned above. In particular, the person skilled in the art may apply any variant to the stated embodiments and combine them to benefit from their various advantages. In particular, the invention may be generalized to a nonuniform quantizer, i.e. the quantization steps of which vary. For instance, low values may be quantized more finely to take robustness and/or visibility criteria into account. If we work on p-uplets of DCT coefficients, Qp may be varied according to the frequency of said coefficients in order to take account of the fact that the high frequency coefficients are less visible/robust.

In general, the method may be used to determine the quality of a signal other than a video signal for instance an audio signal.

The invention is advantageously used for real-time transmission channel monitoring applications.

**Claims**

1. Digital data set watermarking method **characterized in that** it comprises the following steps:

   a. generating (10), from at least one part of said digital data set, a first set of M n-uplets ($L_i$) representative of said digital data set where n and M are integers, M≥1 and n≥1,

   b. quantizing (20) each of said n-uplets of said first set in N quantized n-uplets $\left( L_i^k \right)$ with N quantizers, where N is an integer and $N \geq 2$ ;

   c. exhaustive decoding (30) of said first set of M n-uplets so as to determine in a predefined batch of sets of M quantized n-uplets, a set of M quantized n-uplets $\left( L_i^{Bi} \right),$ called second set, closest in the sense of a predefined metric to said first set, and

   d. modifying (40) at least one data item of said digital data set in such a way that said first set generated according to step a) from said modified data set is equal to said second set.

2. Method according to claim 1, in which step c) consists in a Viterbi decoding.

3. Method according to claim 1 or 2, in which said digital data set is an image.

**4.** Method according to claim 3, in which said image is divided into non-overlapping pixel blocks, n is equal to 1 and in which each 1-uplet of said first set is equal to the difference between the average luminance of a first block of said image and the average luminance of a second block of said image, said second block being adjacent to said first block and located below said first block.

**5.** Method according to one of claims 1 to 4, in which N=2.

**6.** Quality estimation method after transmission and/or processing of a digital data set watermarked using the watermarking method according to claim 1, **characterized in that** it comprises the following steps:

a. generating (110), from at least one part of said digital data set, a first set of M n-uplets representative of said digital data set where n and M are integers, M≥1 and n≥1,
b. quantizing (120) each of said n-uplets of said first set in N quantized n-uplets with N quantizers, where N is an integer and N ≥ 2 ;
c. exhaustive decoding (130) of said first set of M n-uplets so as to determine in a predefined batch of sets of M quantized n-uplets, a set of M quantized n-uplets, called second set, closest in the sense of predefined metrics to said first set, and
d. estimating (140) the quality of the transmitted and/or processed digital data set by calculating the distance between the first set and the second set.

**7.** Device for watermarking (5) a digital data set, **characterized in that** it comprises:

- first means (50) for generating, from at least one part of said digital data set, a first set of M n-uplets representative of said digital data set where n and M are integers, M≥1 and n≥1,
- second means (51) for quantizing with N quantizers each of said n-uplets of said first set in N quantized n-uplets, where N is an integer and N ≥ 2,
- exhaustive decoder (52) for determining in a predefined batch of sets of M quantized n-uplets a set of M quantized n-uplets, called second set, closest in the sense of a predefined metrics to said first set,
- third means (53) for modifying at least one data item of said digital data set in such a way that said first set generated by said first means from said modified data set is equal to said second set.

**8.** Device according to claim 7, in which said exhaustive decoder (52) is a Viterbi decoder.


**Patentansprüche**

**1.** Verfahren, um digitale Datensätze mit Wasserzeichen zu versehen, **dadurch gekennzeichnet, dass** das Verfahren die folgenden Schritte umfasst:

a. Erzeugen (10) eines ersten Satzes von M n-Tupeln ($L_i$), die den digitalen Datensatz repräsentieren, wobei n und M ganze Zahlen sind und M ≥ 1 und n ≥ 1 ist, mindestens aus einem Teil des digitalen Datensatzes,

b. Quantisieren (20) jedes der n-Tupel des ersten Satzes in N quantisierte n-Tupel ( $L_i^k$ ) mit N Quantisierern, wobei N eine ganze Zahl und N ≥ 2 ist;
c. erschöpfende Decodierung (30) des ersten Satzes von M n-Tupeln, um in einem vorgegebenen Stapel von Sätzen von M quantisierten n-Tupeln einen Satz von M quantisierten n-Tupeln ( $L_i^{Bi}$ ) **,** ein zweiter Satz

genannt, zu bestimmen, der im Sinn einer vorgegebenen Metrik dem ersten Satz am nächsten ist, und
d. Ändern (40) mindestens eines Datenelements des digitalen Datensatzes in der Weise, dass der in Übereinstimmung mit Schritt a) aus dem geänderten Datensatz erzeugte erste Satz gleich dem zweiten Satz ist.

**2.** Verfahren nach Anspruch 1, in dem der Schritt c) aus einer Viterbi-Decodierung besteht.

**3.** Verfahren nach Anspruch 1 oder 2, in dem der digitale Datensatz ein Bild ist.

**4.** Verfahren nach Anspruch 3, in dem das Bild in nicht überlappende Pixelblöcke geteilt ist, in dem n gleich 1 ist und in dem jedes 1-Tupel des ersten Satzes gleich der Differenz zwischen der mittleren Leuchtdichte eines ersten Blocks des Bilds und der mittleren Leuchtdichte eines zweiten Blocks des Bilds ist, wobei der zweite Block an den ersten Block angrenzt und sich unter dem ersten Block befindet.

**5.** Verfahren nach einem der Ansprüche 1 bis 4, in dem N = 2 ist.

**6.** Qualitätsschätzungsverfahren nach der Übertragung und/oder Verarbeitung eines digitalen Datensatzes, der unter Verwendung des Verfahrens, um mit einem Wasserzeichen zu versehen, nach Anspruch 1 mit einem Wasserzeichen versehen worden ist, **dadurch gekennzeichnet, dass** das Verfahren die folgenden Schritte umfasst:

    a. Erzeugen (110) eines ersten Satzes von M n-Tupeln, die den digitalen Datensatz repräsentieren, wobei n und M ganze Zahlen sind und M ≥ 1 und n ≥ 1 ist, mindestens aus einem Teil des digitalen Datensatzes,
    b. Quantisieren (120) jedes der n-Tupel des ersten Satzes in N quantisierte n-Tupel mit N Quantisierern, wobei N eine ganze Zahl und N ≥ 2 ist;
    c. erschöpfende Decodierung (130) des ersten Satzes von M n-Tupeln, um in einem vorgegebenen Stapel von Sätzen von M quantisierten n-Tupeln einen Satz von M quantisierten n-Tupeln, ein zweiter Satz genannt, zu bestimmen, der im Sinn einer vorgegebener Metrik dem ersten Satz am nächsten ist, und
    d. Schätzen (140) der Qualität des übertragenen und/oder verarbeiteten digitalen Datensatzes durch Berechnen des Abstands zwischen dem ersten Satz und dem zweiten Satz.

**7.** Vorrichtung, um einen digitalen Datensatz mit Wasserzeichen zu versehen (5), **dadurch gekennzeichnet, dass** die Vorrichtung umfasst:

    - erste Mittel (50), um mindestens aus einem Teil des digitalen Datensatzes einen ersten Satz von M n-Tupeln zu erzeugen, die den digitalen Datensatz repräsentieren, wobei n und M ganze Zahlen sind und M ≥ 1 und n ≥ 1 ist,
    - zweite Mittel (51) zum Quantisieren jedes der n-Tupel des ersten Satzes in N quantisierte n-Tupel mit N Quantisierern, wobei N eine ganze Zahl und N ≥ 2 ist,
    - einen erschöpfenden Decoder (52) zum Bestimmen eines Satzes M-quantisierter n-Tupel, der zweite Satz genannt, in einem vorgegebenen Stapel von Sätzen von M quantisierten n-Tupeln, der im Sinn einer vorgegebenen Metrik dem ersten Satz am nächsten ist,
    - dritte Mittel (53) zum Ändern mindestens eines Datenelements des digitalen Datensatzes in der Weise, dass der durch die ersten Mittel aus dem geänderten Datensatz erzeugte erste Satz gleich dem zweiten Satz ist.

**8.** Vorrichtung nach Anspruch 7, in der der erschöpfende Decoder (52) ein Viterbi-Decoder ist.

## Revendications

**1.** Procédé de tatouage d'un ensemble de données numériques **caractérisé en ce qu'**il comprenant les étapes suivantes :

    a. générer (10), à partir d'au moins une partie dudit ensemble de données numériques, un premier ensemble de M n-uplets ($L_i$) représentatifs dudit ensemble de données numériques avec n et M entiers , M ≥ 1 et n ≥ 1 ;

    b. quantifier (20) chacun desdits n-uplets dudit premier ensemble en N n-uplets quantifiés $\left( L_i^k \right)$ avec N quantificateurs, avec N entier et N ≥ 2 ;
    c. décodage exhaustif (30) dudit premier ensemble de M n-uplets de telle sorte à déterminer dans un lot prédéfini d'ensembles de M n-uplets quantifiés un ensemble de M n-uplets quantifiés, dit deuxième ensemble, le plus proche au sens d'une métrique prédéfinie dudit premier ensemble; et
    d. modifier (40) au moins une donnée dudit ensemble de données numériques de telle sorte que ledit premier ensemble généré selon l'étape a) à partir dudit ensemble de données modifié soit égal audit deuxième ensemble.

**2.** Procédé selon la revendication 1, dans lequel l'étape c) consiste en un décodage de Viterbi.

**3.** Procédé selon l'une des revendications 1 ou 2 , dans lequel ledit ensemble de données numérique est une image.

**4.** Procédé selon la revendication 3, dans lequel ladite image est divisé en blocs de pixels ne se recouvrant pas, n est égal à 1 et dans lequel chaque 1-uplet dudit premier ensemble est égal à la différence entre la luminance moyenne d'un premier bloc de ladite image et la luminance moyenne d'un deuxième bloc de ladite image, ledit deuxième bloc étant adjacent audit premier bloc et localisé en dessous dudit premier bloc.

5. Procédé selon l'une des revendications 1 à 4, dans lequel N=2.

6. Procédé d'estimation de la qualité après transmission et/ou traitement d'un ensemble de données numériques tatoué par le procédé de tatouage selon la revendication 1, **caractérisé en ce qu'**il comprend les étapes suivantes :

   a. générer (110), à partir d'au moins une partie dudit ensemble de données numériques, un premier ensemble de M n-uplets représentatifs dudit ensemble de données numériques avec n et M entiers , $M \geq 1$ et $n \geq 1$ ;
   b. quantifier (20) chacun desdits n-uplets dudit premier ensemble en N n-uplets quantifiés avec N quantificateurs, avec N entier et $N \geq 2$ ;
   c. décodage exhaustif (30) dudit premier ensemble de M n-uplets de telle sorte à déterminer dans un lot prédéfini d'ensembles de M n-uplets quantifiés un ensemble de M n-uplets quantifiés, dit deuxième ensemble, le plus proche au sens d'une métrique prédéfinie dudit premier ensemble; et
   d. estimer (140) la qualité dudit ensemble de données numériques transmis et/ou traité en calculant la distance entre ledit premier ensemble et ledit second ensemble.

7. Dispositif de tatouage (5) d'un ensemble de données numériques **caractérisé en ce qu'**il comprend:

   - des premiers moyens (50) pour générer, à partir d'au moins une partie dudit ensemble de données numériques, un premier ensemble de M n-uplets représentatifs dudit ensemble de données numériques avec n et M entiers, $M \geq 1$ et $n \geq 1$;
   - des seconds moyens (51) pour quantifier avec N quantificateurs chacun desdits n-uplets dudit premier ensemble en N n-uplets quantifiés, avec N entier et $N \geq 2$ ;
   - décodeur exhaustif (52) pour déterminer dans un lot prédéfini d'ensembles de M n-uplets quantifiés un ensemble de M n-uplets quantifiés, dit deuxième ensemble, le plus proche au sens d'une métrique prédéfinie dudit premier ensemble;
   - des troisièmes moyens (53) pour modifier au moins une donnée dudit ensemble de données numériques de telle sorte que ledit premier ensemble généré par lesdits premiers moyens à partir dudit ensemble de données modifié soit égal audit deuxième ensemble.

8. Dispositif selon la revendication 7, dans lequel ledit décodeur exhaustif (52) est un décodeur de Viterbi.

FIG.1

$$L_0 = M_{1,0} - M_{0,0}$$

$$L_m = M_{1,m} - M_{0,m}$$

$$L_{M-1} = M_{2n+1,m} - M_{2n,m}$$

| $M_{0,0}$ | $M_{0,1}$ | | $M_{0,m-1}$ | $M_{0,m}$ |
| $M_{1,0}$ | $M_{1,1}$ | | $M_{1,m-1}$ | $M_{1,m}$ |
| $M_{2n,0}$ | $M_{2n,1}$ | | $M_{2n,m-1}$ | $M_{2n,m}$ |
| $M_{2n+1,0}$ | $M_{2n+1,1}$ | | $M_{2n+1,m-1}$ | $M_{2n+1,m}$ |

FIG.2

$$\left\{L_i\right\}_{i\in[0,M-1]}$$

$$\left\{L_i^k\right\}_{i\in[0,M-1],\,k\in[0,N-1]}$$

Init, i=0

$$dist(L_i,L_i^0)<dist(L_i-L_i^1)\,?$$

YES        NO

$b_i=0$        $b_i=1$

i=i+1

i>M ?     NO

YES

310

$$decode\left\{b_i\right\}_{i\in[0,M-1]}$$

30

320

$$\left\{B_i\right\},\, i\in[0,M-1]$$

$$\left\{L_i^{B_i}\right\}_{i\in[0,M-1]}$$

FIG.3

FIG. 4

FIG. 5